Europäisches Patentamt

**European Patent Office**

Office européen des brevets

(11) Publication number: **0 101 248**
**A2**

(12) **EUROPEAN PATENT APPLICATION**

(21) Application number: **83304479.5**

(22) Date of filing: **03.08.83**

(51) Int. Cl.³: **B 29 C 25/00**

(30) Priority: **05.08.82 GB 8222653**
**06.12.82 GB 8234769**

(43) Date of publication of application:
**22.02.84 Bulletin 84/8**

(84) Designated Contracting States:
**AT BE CH DE FR IT LI NL SE**

(71) Applicant: **N.V. RAYCHEM S.A.**
**Diestsesteenweg 692**
**B-3200 Kessel-lo(BE)**

(72) Inventor: **Overbergh, Noel Marcel Michiel**
**Corbielaan 20**
**B-3060 Bertem(BE)**

(72) Inventor: **De Blauwe, Francis Josef Anna Maria**
**Camillus**
**Grotendries 16**
**Lubbeek B-3212(BE)**

(74) Representative: **Benson, John Everett et al,**
**Raychem Limited Morley House 26-30 Holborn Viaduct**
**London EC1(GB)**

(54) Flexible recoverable tubular article.

(57) A convoluted recoverable tubular article 3 is used to enclose a substrate 2. The ends 5 of the article 3 are recovered into engagement with the substrate 2, allowing re-entry by severing the article at one end 6 and compressing the article to expose the substrate. The article then can be extended to the extent necessary to reseal it.

Fig.5.

Croydon Printing Company Ltd.

## FLEXIBLE RECOVERABLE TUBULAR ARTICLE

The present invention relates to recoverable tubular articles and in particular to recoverable tubular articles having enhanced flexibility.

Recoverable articles are useful for enclosing many substrates for the provision of environmental sealing, mechanical protection or electrical insulation. Such articles may be manufactured as tubes of closed cross-section or may be made in sheet form and later wrapped around the article they are to enclose. In either case they can be made large enough easily to enclose the substrate, and then recovered into close contact with the substrate. The need for precise tolerances is thus avoided. It can be seen therefore that recoverability will generally involve shrinking, and this is preferably initiated by heating.

A heat recoverable article is an article the dimensional configuration of which may be made substantially to change when subjected to heat treatment.

Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962; 3,086,242 and 3,957,372. As is made clear in, for example, U.S. Patent 2,027,962, the original dimensionally heat-stable form may be a transient form in a continuous process in which, for example, an extruded tube is expanded, whilst hot, to a dimensionally heat-stable form but, in other applications, a preformed dimensionally heat stable article is deformed to a dimensionally heat unstable form in a separate stage.

One manner of producing a heat-recoverable article comprises moulding the polymeric material into a desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles as described, for example, in British Patent 1,440,524, an elastomeric member such as an outer tubular member is held in a stretched state by a second member, such as an inner tubular member, which, upon heating weakens and thus allows the elastomeric member to recover.

Where such a recoverable article is used for encapsulation it will generally be necessary that the article is in tight contact with the substrate to be sealed, at least at the ends of the article, and sometimes throughout its length. In order to achieve this close contact with the substrate it is desirable that the article in its unrecovered state can conform reasonably well to the shape of the substrate, since otherwise very large recovery ratios may be needed.

Japanese utility model 49-109170 discloses a heat-shrinkable tubular covering for a wire harness. In order to accommodate bends in the harness, and in order to facilitate insertion of the harness into the tube, the tube is convoluted. This allows it to bend and to be bunched up so the harness can
easily be slid within it. When the harness is within the
tube, the tube is shrunk along its whole length. The tube is
moulded in a convoluted form and then expanded·so that the
convolutions will not ·disappear on shrinkage, unless the
harness is of large diameter, in which case the tube will
increase in length on radial shrinkage due to the convolutions
unfolding. This could cause buckling.

One particular area of application of heat-recoverable
articles of the type described above is in the insulation
and protection of junctions between supply lines, especially
electric cables. In making such junctions, for example,
between telephone or power cables, many problems arise in
meeting the necessary requirements of continuity of insulation
and earthing, of sealing the joint against the ingress of
contaminants such as moisture and insects and in providing
the necessary strength of resistance to tension, compression,
flexing and impact. Where a satisfactory encapsulation is
provided it is often difficult to regain access to the cable
junction without completely destroying the materials used to
provide the encapsulation.

British Patent 1,431,167 discloses one type of sealing
system, namely a heat-shrinkable sleeve, which may be a
wrap-around sleeve, provided with a central reinforcement
comprising a relatively rigid longitudinally split tube.
Typically such a tube is made from a pair of·semi-cylindrical
half shells, for example made from aluminium.

This closure assembly has the advantage that it may
easily be re-entered for repair work or modification of a
cable joint, but relatively rigid support means are required
to keep the split tube in its correct orientation and this
and other factors make the assembly rather expensive.
Furthermore, the outer shrunk sleeve has to be removed to
gain re-entry, which generally involves destroying it.

An alternative idea, which is disclosed and claimed in US Patent 4289553, is the use of an inner liner comprising a continuous thin metal foil provided with central reinforcing means comprising one or more longitudinally compressible coils. The assembly is re-enterable since the heat-shrinkable sleeve can be cut and removed and the coil(s) can be longitudinally compressed so as to allow access to the joint. Once repair or modification has been effected the coil(s) can return to their former configuration. However, because of the coil arrangement the use of a knife to cut the heat-recoverable sleeve/metal foil laminate is rather difficult since there is no continuous surface to support the tip of the knife. Also, this assembly tends to lack longitudinal strength. As in the previous closure, a new outer sleeve will be required for most repairs.

UK patent Publication 2059873 discloses a liner which is a laminate of the following layers, starting from the outer surface: Al foil, MYLAR polyester (Reg. T.M), first pressboard, second pressboard, microporous MYLAR, and wax coating. Here bonding of the aluminium foil to the outer sleeve to prevent capillary transfer results in an assembly which is not re-enterable because the foil is an integral part of the liner. As before, there is no specific provision for saving the outer sleeve if the closure is re-entered.

The difficulty or impossibility of re-entering the closure assembly without destroying all of its components can be a considerable disadvantage. Liners can be complex structures giving the splice case a pleasing appearance and having the functions of suport, acting as a barrier to heat, preventing the ingress of moisture and improving mechanical strength thus providing resistance to impact, static load and thermal cycling under pressure; as a result they can often be the most expensive component of an assembly, and thus are desirably re-usable. Our copending UK Patent Publication 2093402 discloses a liner having
excellent strength, moisture impermeability and heat-
resistance, and which is reusable. This is achieved by
providing in the assembly a layer which can be bonded to the
inner surface of the sleeve to prevent wicking but which is
removable from the remainder of the liner.

This earlier invention provides a liner suitable for
supporting a sleeve in a closure assembly, which in use
comprises a laminate of:
    (A)   a re-usable support; and
    (B)   a disposable outer layer held in position with
respect to the support such that it is separable therefrom
without damage to the support.

Again it is necessary to remove the sleeve, and this
will in many instances require the sleeve to be cut open and
pulled away making it useless for re-use.

It can be seen that effort has been directed to the
problem of re-entering closure assemblies whose environmental
sealing results from recovery of a plastics material. This
effort has resulted in various designs for liners which
allow a major part of the liner to be saved, but no technique
has been proposed for saving the original sleeve: it is
generally necessary for a new sleeve to be recovered over the
original, at least partially retained, liner and over the
butts of the original sleeve that remain after a central
portion has been removed for access to the cable splice.

We have now designed a closure assembly where end
portions only of a sleeve are recovered into contact with
the substrate to be protected, a new end portion being
recovered after each re-entry. The axial expansion or
contraction necessary to allow the substrate to be exposed and then resealed by the shorter sleeve that results from it being severed for re-entry is a consequence of the sleeve being convoluted.

Thus, the present invention provides a method of enclosing a substrate, which comprises:

placing around the substrate a recoverable article having axially spaced convolutions by means of which the article can be axially compressed or extended; and

recovering into sealing engagement with the substrate one or more end portions only of the article.

In general, the article will be tubular (at least when in use) and its two opposing end portions will be recovered into engagement with the substrate. Reference is made, however, to one or more end portions being recovered since it is envisaged that one end could be fixed by some other, generally more permanent, fastening means.

Preferred features of the article are that it is tubular, is reinforced by fibrous material, recovers by shrinking, recovers under the action of heat, and is substantially compressible or extendable by hand. Any of these features can be provided singly, or two or more can be combined.

Access can easily be gained to a substrate enclosed by the method of the invention, and resealing can be achieved without loss of the recoverable article.

The invention therefore also provides a method of re-entering and resealing an enclosure around a substrate, the enclosure comprising a recoverable article having axially spaced convolutions by means of which the article when free can be substantially axially compressed the article having only one or more end portions recovered into sealing engagement with the substrate, which method comprises:

severing the article at a position adjacent an end portion;
axially compressing the article to expose the substrate;

axially extending the article to cover again the
substrate, and

recovering into sealing engagement with the substrate a
recoverable portion of the article adjacent the end produced by
the severing.

In an alternative method, the article is severed
adjacent each of two opposite end portions and slid axially
to expose the substrate. The article is then slid back to
cover again the substrate, and axially extended to the
extent necessary to produce two new seals by recovery.

Where the convoluted article is used to seal a substrate
to a housing at the substrate's, point of entry into the
housing , access can be gained in the following way.  A cover
is removed from the housing and the substrate is pulled out
of the housing causing the convoluted seal to be compressed.
After attending to the substrate, it is simply pushed back
into the housing.

The invention further provides a substrate enclosed by
a recoverable article having axially spaced convolutions by
means of which the article when free can be substantially
axially compressed or extended, the article being recovered
at one or more end portions only into sealing engagement
with the substrate.  .

The article of the invention is particularly useful as
an enclosure for a splice in a telephone cable, or a joint
in another type of supply line. Here the article is recovered
(generally shrunk) at its end to provide a seal to the cable
at each side of the splice. When the splice needs attention
the enclosure may be cut or otherwise severed adjacent one of its ends or at two opposite ends and the convolutions
allow the article to be pulled back where necessary to
expose the splice. Resealing is easily accomplished  by
shrinking down onto the cable the or each new end portion of
the tubular article. If the article has sufficiently
deep convolutions, the enclosure can be re-entered and
resealed in this way several times. For this application,
the article could be internally coated with a sealant, for
example a heat-activatable sealant such as a hot-melt
adhesive or a reactive system, for improved environmental
sealing. Alternatively, such sealant could be provided as
discrete sealing strips to be wrapped or otherwise installed
around the cables at the positions where the article is to
contact them or is to contact the old ends of the sleeve on
recovery. Such sealing strips can incorporate metal foil for
cable protection, or for better heat conduction.

For some uses, for example cable splicing, it is
desirable that the article posseses axial strength. Where
two cables are joined axial strength in the splice case is
desirable in order that the conductor connections are not
subjected to axial load. In some embodiments of this invention
the article is convoluted deliberately to allow extension
(an alternative being to allow compression), which feature
appears to be incompatible with axial strength. What we do,
however, where extension and axial strength are both desired,
is to reinforce the article with axially reinforcing means
such as glass or other high strength fibres, such fibres are
preferably embedded in a hot-melt adhesive, or other reversibly
heat-activatable sealing material. If the activation temperature
of the sealing material is properly chosen, the resistance
to extension provided by the fibres can be destroyed without
recovery occuring. Alternatively, and depending on the extent
of extension required, extension and recovery can be allowed
for substantially simultaneously by heating only the ends of the article. In this alternative the convolutions just at the end or ends of the article are able to provide the desired amount of extension, without the central portion being stretched. This restriction of stretching to the end or ends of the article may also occur where the article is stiff and is significantly softened by the heat applied for recovery.

The word fibres as used herein is intended to cover both short fibres, which would be randomly dispersed throughout the sealing material, and also long fibres each of which extends from one end of the splice case to the other. In the first of these options, the sealing material loaded with fibres would coat a surface of the recoverable article thus reinforcing the article. In the second option each long fibre runs from one cable, across the splice, to the other cable; each fibre becomes embedded in adhesive only at the ends where the article is recovered into engagement with the cables, and does not contact the central region of the recoverable article. It will be realised that in each of these cases the re-inforcement provided by the fibres may be destroyed on heating, thus allowing the recoverable article to be extended as need be.

The article preferably recovers under the action of heat, and this feature is usefully combined with the presence of a heat-activatable sealing material since the single operation of heating then causes recovery and activation of the sealing material. For some conditions, in dangerous environments for example, it may be preferable that recovery is effected without heat, for instance by the application of water or other solvent, or at low temperatures such as about 80°C -120°C. At lower temperatures, hot air rather than flame can be used.

An important feature of the recoverable article, as regards flexibility, for this use is of course axial compressibility or extensibility. This will depend on the geometry of the convolutions, on the number of convolutions and on the nature of the material from which the recoverable article is made. The degree of available extensibility or compressibility is conveniently quoted as a ratio between the maximum and minimum nominal lengths of that portion of the article (which may be all of the article) which is provided with convolutions. By these nominal lengths we mean what would be the length if the article were extended so that the convolutions disappeared, and what would be the length if the convolutions were fully bunched together. The material of the article may of course be such that these lengths could not be achieved without the use of forces so large that the article would be damaged. The ratio between these nominal lengths is preferably from 2:1 to 6:1, more preferably about 4.5 : 1, since such values allow sufficient exposure of, say, a cable splice without the need for an excessively long splice case. In addition to these preferred extents of extension and compression, we prefer that the force required is low enough for the movement to be effected easily by hand. Where the method of re-entry involves severing adjacent only one end of the article, the rest position of the article is preferably about mid way between its nominal maximum and minimum lengths, since re-entry involves both compression and extension. Where, however, two end portions are severed and the article slid along the substrate, re-entry requires only extension and the rest position is preferably originally at or towards the fully compressed position.

The recoverable tubular article may simply be a tube having convolutions, which preferably extend along its entire length. For some applications, however, a body can be provided of which only a part is the tubular article of the invention. For example, the body can be an enclosure having one or more tubular convoluted outlets. The convolutions allow any one outlet to be bent away from the other in order that it may be individually recovered or otherwise dealt with.

The geometrical configuration of the convolutions and the material from which the article is made will be chosen according to the nature of the substrate and the conditions it will be subjected to in use. A further consideration is the way in which the article is made since this will have an effect on the flexibility of the materials and on the variation in wall thickness across the convolutions. A recoverable article can be partially recovered over a convoluted support to produce a convoluted recoverable article where the valleys of the convolutions are less expanded than the peaks. Alternatively, the convolutions may be produced by positively deforming the material, either by deforming a smaller article to produce the peaks or a larger article to produce the valleys. A further technique is to induce recoverability in a convoluted article, in which case convolutions would remain after recovery. The convolutions may be circular, or they may form a helix of constant or varying pitch. If the configuration of the substrate to be covered is known in advance, an article can be designed having convolutions at certain locations only, the size and shape of the convolutions along the article being chosen to suit the substrate.

Where sealing contact between the article and the substrate is required over a substantial length of the substrate, it is preferred that the convolutions disappear on recovery. The reason for this is that a greater leak path and great axial strength result if the recovered article is a plain tube. It may also be desirable that no air gaps remain between the article and the substrate : this can be important when covering high voltage conductors since discharge is thereby reduced. Where the convolutions do not disappear on recovery, or only partially disappear, greater resistance to leakage is provided by circular convolutions, compared to convolutions forming a helix.

The invention is now further illustrated, by way of example, with reference to the accompanying drawings, in which:

Figures 1 and 2 show tubular articles in their rest configuration;

Figure 3 shows an article after recovery; -

Figures 4 and 5 show a joint in a substrate being enclosed;

Figure 6 shows re-entry of an enclosure;

Figure 7 shows a larger article having as an outlet a convoluted article; and

Figures 8a + b shows convoluted articles used in conjunction with a rigid housing.

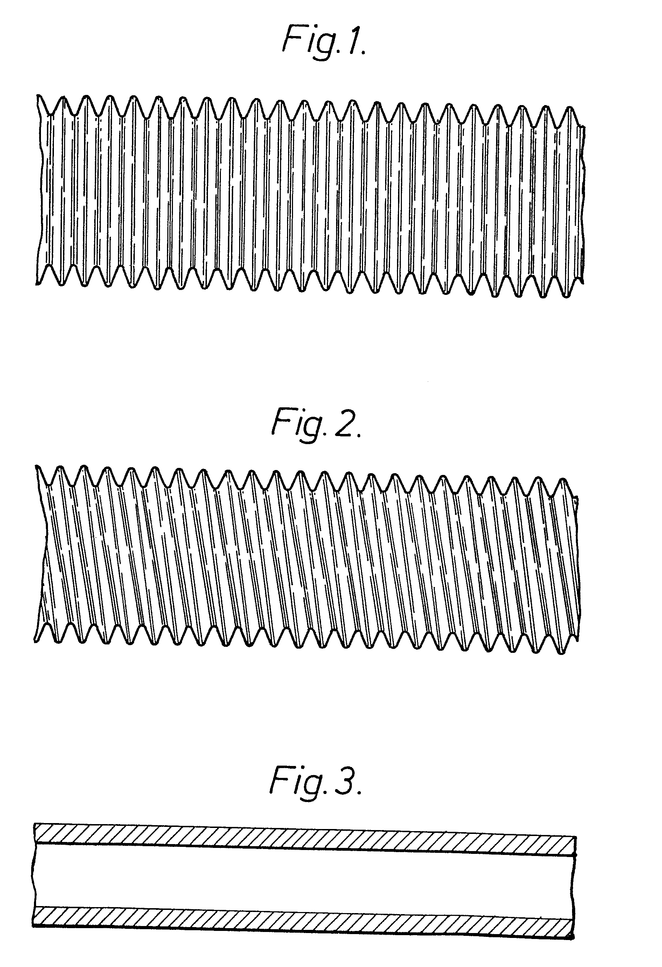

Figures 1 and 2 show tubular articles having axially spaced convolutions throughout their lengths. In Figure 1, the convolutions are circular, and in Figure 2 they form a helix of constant pitch. The articles are shown in their rest configuration, and it can be seen that they can be both compressed and extended, and can also be bent. The ease with which they can be deformed will depend on the intended use, but for most uses deformation by hand is preferred.

The article of Figure 1 or of Figure 2 is shown in Figure 3 in its recovered form. It has shrunk in diameter to a plain tube of greater, and uniform, wall thickness. Had the recoverable article been made by expanding a convoluted tube, then the recovered form would be convoluted.

The radial recovery ratio is preferably from 1.5 : 1 to
4 : 1, the precise value depending on at which part of the
convolutions the figure is measured.

If it is desirable that the convolutions disappear,
some axial shrink may be provided (up to about 35% then
being preferred) by axially stretching the article at some
stage during production. This may not be necessary since if
the convolutions are themselves recoverable, they will
generally disappear even if the article has not been axially
stretched.

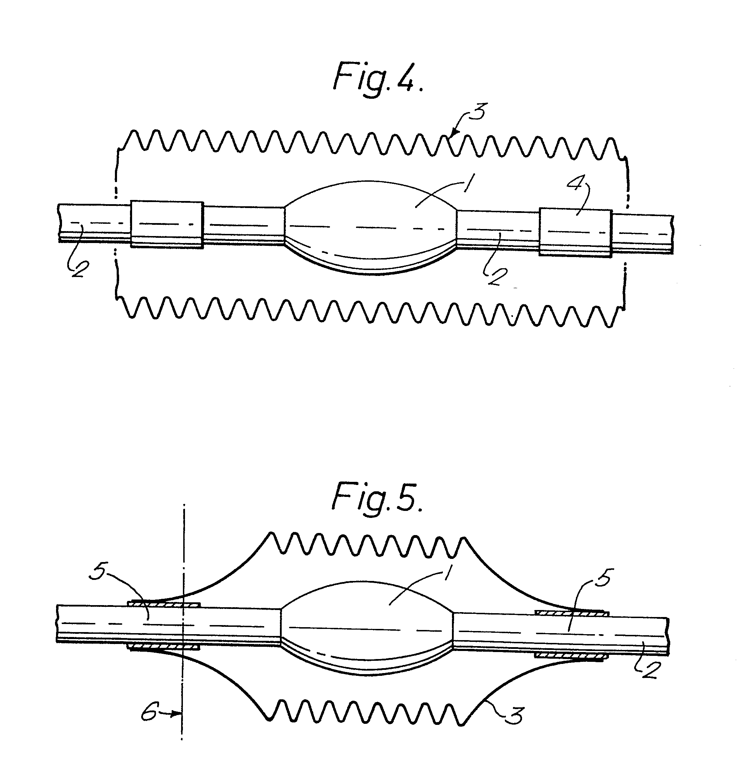

Figure 4 shows a joint 1 in a substrate 2 about to be
enclosed by a convoluted article 3, before recovery of the
article.  The joint in the substrate is preferably a splice
in a cable, such as a telecommunications cable. For improved
environmental sealing a sealing material can be provided
between the article 3 and the substrate 2 at the positions
where they will meet on recovery. In order to do this, the
article may be internally coated with the sealing material
over its entire length, or just at its ends. If the article
3 is supplied as a continuous length for cutting on site to
the desired size then continuous coating may be preferred.
Alternatively the sealing material may be provided as
discrete strips which may be wrapped or otherwise installed
around the substrates 2, as illustrated. The sealing material
is preferably a hot-melt adhesive, optionally provided in
conjunction with a metal foil for better cable protection or
for heat conductance.

Figure 5 shows the arrangement of Figure 4 after
recovery of the article 3. End portions 5 of the article 3
are recovered into contact with the substrate 2.

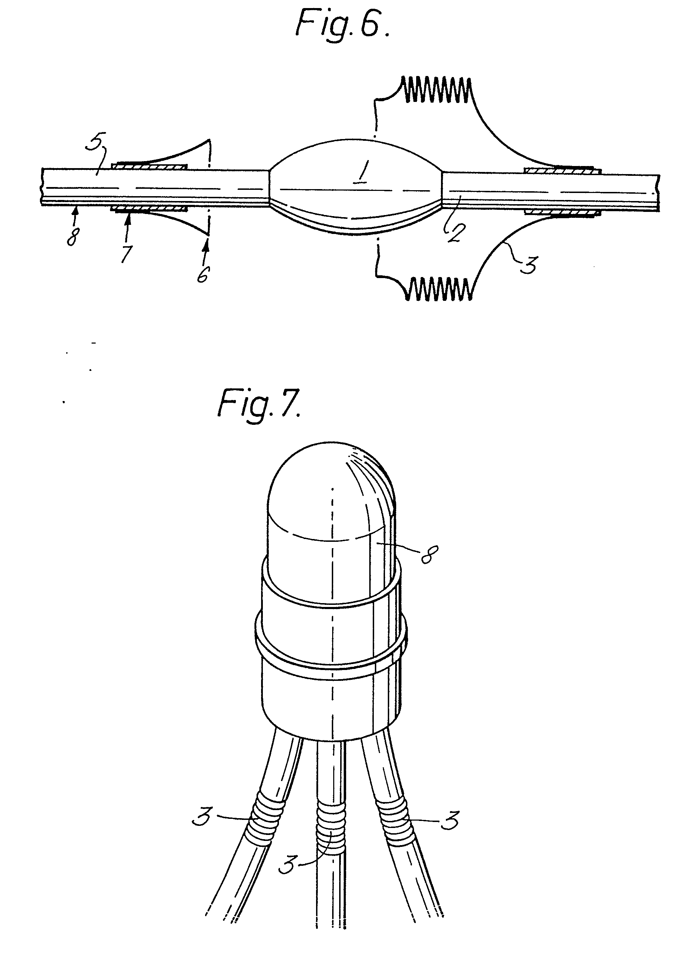

The enclosure of Figure 5 can be re-entered for attention
to the joint 1, as illustrated in Figure 6. The article 3 is cut or otherwise severed at a position 6 adjacent the end portion 5. The article is then axially compressed (in the right hand direction as drawn) to expose the joint 1. If the article is highly flexible it may be pulled to the right (as drawn) sufficiently far that it becomes inside-out. An advantage of this is that it would be less likely to spring back while the joint 1 was being attended to. After attention to the joint 1, the article is drawn to the left to re-enclose the joint and the new end of the article produced by the earlier severing is recovered onto the substrate. If the article 3 has sufficient extensibility it will be able to stretch past the old joint to a position 7, where it will be able to be recovered into contact with the old end of the article 5, or to a position 8 where it can contact a fresh portion of the substrate 2. The article 3 can be provided with sufficient extensibility to allow for re-entry and resealing several times. The article 3 may enclose a branch-off between two or more cables or other substrates. In such a case, the crutch region between the article 3 and the branching cables can be sealed by means of a branch-off clip. Such clips are disclosed in U.K. Patent Specifications 1604981, and 1604984.

In the alternative re-entry method mentioned above, the article 3 is severed not only at position 6 but also at the equivalent position on the right-hand side of the article as drawn. The article is then slid along the substrate 2 to expose the joint 1. After attending to the joint 1, the article 3 is repositioned and its ends recovered to seal against the substrate. Extension provided by the convolutions allows the new ends of the article to be recovered over the old ends of the article 5 or onto a fresh portion of substrate 2.

Figure.7 shows a body 8 having as at least one outlet, a recoverable convoluted tube 3. The body 8 is preferably a radial distribution closure for a telecommuncations network.
A part of the body (the top part as drawn) may be separable
from another part which carries or which comprises the
articles 3. The two parts may be joined together by adhesive
or by an o-ring and clamp or by other means. The articles 3
may be shrunk down onto cables or other substrate which are
to be sealed to the body 8.

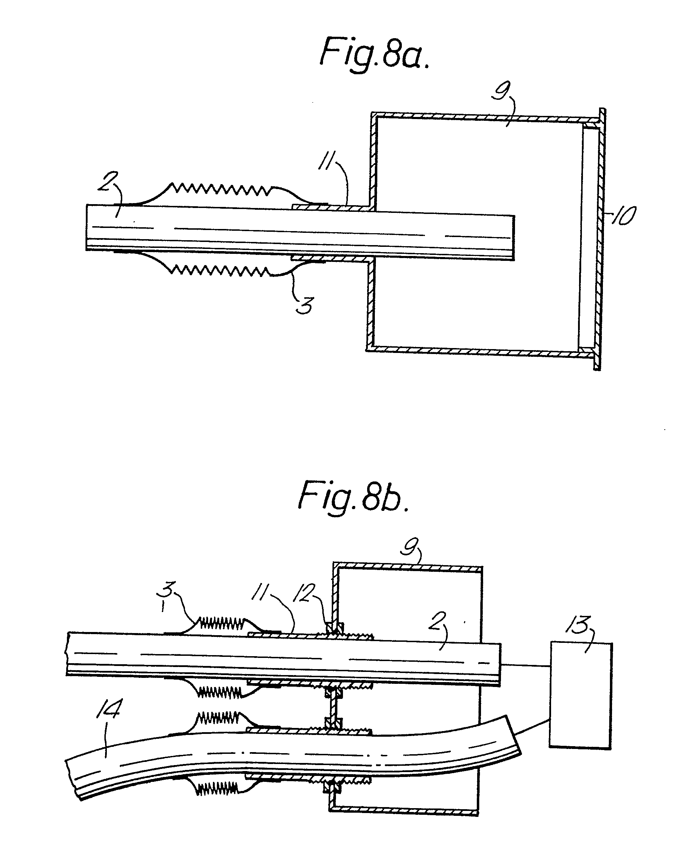

Figures 8a + b show the use of a recoverable convoluted
article 3 to seal a substrate 2 to a separate housing
9. This is similar to figure 7, but here the substrate 2 is
shown passing through the length of the article 3 and into
the housing 9. The housing may be closed by a removable
cover 10. The article 2 is recovered at its ends only:
one end is recovered into engagement with the substrate,
and the other end is recovered into engagement with an
aperture 11 in the housing. The aperture shown is walled in
order that the article 3 may be secured by shrinkage,
although the article may be shrunk over a major part of the
article rather than a specially formed walled part. The
wall of the aperture 11 need not however project from the
housing, and may be buried in a surface thereof. The walled
aperture may be an integral part of the housing as shown in
figure 8a, or it may be separate and secured to the housing
by means,for example of a series of nuts 12. The unrecovered
convolutions remaining on the article 3 after installation
allow the substrate 2 to be withdrawn from the housing for
inspection etc. This withdrawl of the substrate 2, which
causes the convolutions to bunch together, is shown in
figure 8b. When the recoverable article is in its rest
configuration it may posses only very shallow convolutions
since in this embodiment it is compressibility that is
required.

This embodiment is of particular value for housing
joints in,especially points of amplification for, CATV
cables. The cable 2 enters through one aperture 11 and is sealed by the partial recovery of a piece of convoluted tubing 3. The cable is connected to an amplifier 13 and a second cable 14 leaves through a second aperture, as shown schematically in figure 8b. The amplifier can thus be pulled out of housing for inspection by causing the convoluted tubing to become compressed. The housing may be made of any suitable material but preferably comprises a rigid material such as a plastic. An alternative use for this embodiment is for sealing cables or other supply lines, in particular fibre optic cables, at their points of entry into ducts. this allows a good, re-enterable, seal which can accomodate movement between the cable and the duct.

## CLAIMS

1.    A method of enclosing a substrate, which comprises: placing around the substrate a recoverable article having axially spaced convolutions by means of which the article can be axially compressed or extended; and recovering into sealing engagement with the substrate one or more end portions only of the article.

2.    A method according to Claim 1, in which the article is axially compressible or extensible by hand.

3.    A method according to Claim 1, or 2, in which the ratio between the nominal maximum and minimum axial lengths of a convoluted part of the article is from 2 : 1 to 6 : 1.

4.    A method according to Claim 3, in which said ratio is about 4.5 : 1.

5.    A method according to any of Claims 2-4, in which the article in its rest configuration is compressible and extensible.

6.    A method according to Claim 5, in which the article it its rest configuration is about equally compressible and extensible.

7.    A method according to any preceding Claim, in which the article is elastically flexible.

8.    A method according to any preceding Claim, in which the article is heat shrinkable.

9.    A method according to Claim 8, in which the recovery temperature of the article is about 80°C.

10.   A method according to any preceding Claim, in which the recovery ratio of the article is from 1.5 : 1 to 4 : 1.

11.   A method according to any preceding Claim, in which the article has longitudinal recovery.

12.   A method according to Claim 11, in which the longitudinal recovery is shrinkage of up to 35%.

13.   A method according to any preceding Claim, in which said convolutions substantially disappear on recovery.

14.   A method according to any preceding Claim, in which the convoluted portion of the article in the recoverable state has a uniform wall thickness in the recovered state.

15.   A method according to any preceding Claim, in which the convolutions are circular.

16.   A method according to any of Claims 1-14, in which the convolutions of the article form a helix.

17.   A method according to any preceding Claim, in which the article has convolutions along its entire length.

18.   A method according to any preceding Claim, in which the article has sealing material on an internal surface.

19.   A method according to any preceding Claim, in which the article is a self-supporting tube having no internal support means.

20.  A method according to any preceding Claim, in which the substrate is partially inserted through an aperture in a rigid housing such that the substrate protrudes from the housing, and the recoverbale article is recovered into sealing engagement at one end thereof with the substrate and at the other end thereof with the housing around the aperture, thereby sealing the aperture and allowing the substrate to be inserted further into the housing by compression of the convolutions of the article.

21.  A method according to Claim 20, in which the housing has at least two apertures through which respective substrates are inserted and are sealed by recoverable convoluted articles.

22.  A method according to Claim 20 or 21, in which the or each substrate is a CATV cable.

23.  A method according to any of Claim 1-19 in which the article comprises a body and at least one outlet which bears the convolutions and the end portion.

24.  A method according to any preceding Claim, which additionally comprises providing a sealing material between the article and the substrate, at those regions where they engage after recovery.

25.  A method according to Claim 24, in which sealing material is provided by surrounding the substrate with discrete sealing members.

26.  A method according to Claim 25, in which the sealing members comprise strips of hot-melt adhesive.

27. A method according to any preceding Claim, in which the article has fibres at a surface thereof providing axial reinforcement.

28. A method according to Claim 27, in which the fibres are glass-fibres.

29. A method according to Claim 27 or 28, in which the fibres are embedded in a reversibly heat-activatable sealing material adhered to a surface of the article.

30. A method according to Claim 27, in which the article is heat-recoverable, heating causing recovery and activation of the sealing material.

31. A method according to Claim 29 or 30, in which activation of the sealing material reduces the axial reinforcement provided by the fibres.

32. A method according to any preceding claim, in which the substrate is a cable splice.

33. A method of re-entering and resealing an enclosure around a substrate, the enclosure comprising a recoverable article having axially spaced convolutions by means of which the article when free can be substantially axially compressed the article having only one or more end portions recovered into sealing engagement with the substrate, which method comprises:
        severing the article at a position adjacent an end portion;
        axially compressing the article to expose the substrate;
        axially extending the article to cover again the substrate; and
        recovering into sealing engagement with the substrate a recoverable portion of the article adjacent the end produced by the severing.

34.  A method of re-entering and resealing an enclosure around a substrate, the enclosure comprising a recoverable article having axially spaced convolutions by means of which the article  when free can be axilly extended the article having only end portions recovered into sealing engagement with the substrate, which method comprises:
        severing the article at a position adjacent each end portion;
        moving the article axially with respect to the substrate to expose the substrate;
        reversing the preceding operation to cover again the substrate; and
        axially extending the article and recovering into sealing engagement with the substrate recoverable portions of the article adjacent each end produced by the severing.

35.  A method of re-entering and resealing according to Claim 33 or 34, in which the substrate is a cable splice.

36.  An assembly which comprises a substrate enclosed by a recoverable article having axially spaced convolutions by means of which the article when free can be substantially axially compressed or extended, the article being recovered at one or more end portions only into sealing engagement with the substrate.

37.  An assembly according to Claim 36, in which the elongate substrate is a cable splice.

38.  A tubular recoverable article having axially spaced convolutions and having axially reinforcing means bonded to a surface thereof by a reversibly heat-activatable sealing material.

39. An article according to Claim 38, in which the reinforcing means are short fibres and randomly embedded throughout the sealing material which internally coats the article.

40. An article according to Claim 38, in which the reinforcing means are fibres each of which extends substantially the length of the article and is bonded to said surface at end portions only of the article.

41. An article according to Claim 38-40, in which the sealing material is a hot-melt adhesive.

42. A kit-of-parts which comprises: a tubular recoverable article having axially spaced convolutions by means of which the article may be extended; means for axially reinforcing the article; and one or more pieces of reversibly heat-activatable sealing material.

43. A substantially rigid housing having a removeable cover, and at least two walled apertures, and a recoverable convoluted tubular article recovered into engagement with each of said walled apertures; each recoverable convoluted article being capable of compression and being recovered into said engagement only at an end portion thereof.

*Fig.1.*

*Fig.2.*

*Fig.3.*

## Fig.4.

## Fig.5.

0101248

Fig. 6.

Fig. 7.

Fig.8a.

Fig.8b.